Europäisches Patentamt

European Patent Office

Office européen des brevets

(19)

(11) Publication number: **0 195 202 B1**

# EUROPEAN PATENT SPECIFICATION

(45) Date of publication of patent specification: **11.12.91**    (51) Int. Cl.⁵: **G06F  9/30**, G06F  9/38

(21) Application number: **86101088.2**

(22) Date of filing: **28.01.86**

(54) **Register selection mechanism and organization of an instruction prefetch buffer.**

(30) Priority: **18.03.85 US 713217**

(43) Date of publication of application:
**24.09.86 Bulletin  86/39**

(45) Publication of the grant of the patent:
**11.12.91 Bulletin  91/50**

(84) Designated Contracting States:
**DE FR GB IT**

(56) References cited:
**FR-A- 2 298 139**
**GB-A- 2 117 945**
**US-A- 4 236 206**
**US-A- 4 502 111**

**IBM TECHNICAL DISCLOSURE BULLETIN, vol. 24, no. 3, August 1981, pages 1401-1403, New York, US; F.T. BLOUNT et al.: "Shared instruction buffer for multiple instruction streams"**

**IBM TECHNICAL DISCLOSURE BULLETIN, vol. 23, no. 2, July 1980, pages 670-672, New York, US; T.J. BLAZEJEWSKI et al.: "Instruction buffer with simultaneous store and fetch operations"**

**DATA REPORT, vol. 4, no. 1, 1976, pages 15-17, Munich, DE; H. BERNDT: "Instruction prefetch of the 7.755 central processor"**

(73) Proprietor: **International Business Machines Corporation**
**Old Orchard Road**
**Armonk, N.Y. 10504(US)**

(72) Inventor: **Oklobdzija, Vojin G.**
**Victor Lane**
**Carmel New York 10512(US)**

(74) Representative: **Killgren, Neil Arthur**
**IBM United Kingdom Limited Intellectual Property Department Hursley Park**
**Winchester Hampshire SO21 2JN(GB)**

## Description

The subject invention is related to instruction prefetch buffers for microprocessors and, more particularly, to a register selection mechanism which enables instruction access on instruction boundaries when used with a microprocessor that operates with variable length instructions.

Single chip integrated circuit (IC) microprocessors are of course well known in the art. These devices have been developed over the past decade from the relatively simple to the very complex. Early examples were limited to 4-bit devices while currently 32-bit devices are being introduced by various manufacturers. Along with an increase in scale, there has been a corresponding increase in sophistication of design to permit greater flexibility in programming. In one specific example, a microprocessor has been developed which operates with variable length instructions. These instructions may be either 32 bits in length or 16 bits in length. It is necessary in order to properly decode the operation codes and operands of the instruction fields that they be accessed on their boundaries.

One technique for ensuring that instructions of different lengths are properly accessed on their boundaries when stored in a prefetch buffer is described in French Patent No 2,298,139. Here, to facilitate high speed processing, blocks of four full words are transferred to a prefetch buffer having four word positions each having two sections corresponding respectively to the most significant and least significant halves of the word. Depending on whether the instruction currently being processed is a half word or a full word in length pairs of gates are activated either two by two or in sequence to gate either a full word or a half word onto an output bus. For a prefetch buffer of four words capacity, this arrangement requires sixteen gates each sixteen bits wide, each with attendant sixteen bit data buses, together with the decoding and other logic necessary to activate the various gates. While it is feasible to accommodate such circuitry in a large processor module, it is impractical in an integrated circuit microprocessor because of the extreme competition for space on a microprocessor chip.

It is therefore an object of the present invention to provide an instruction prefetch buffer which provides useful capacity in an integrated circuit microprocessor without requiring a large amount of space on the chip.

According to the invention there is provided an instruction prefetch buffer comprising a storage array having an n - bit input write port and two m - bit read ports where n = 2m, said array including first and second subarrays of m - bit registers associated respectively with said read ports, said subarrays being addressable under the control of even address decoding means for decoding addresses for the first subarray and odd address decoding means for decoding addresses for the second subarray, and multiplexer means connected to develop an n - bit output of which the m most significant bits are from the first or second subarray according to the setting of a multiplexer control signal, the buffer being characterised by address control logic operable under the control of a read pointer register to set said multiplexer control signal and having address multiplexers settable according to the value of a read pointer to direct an applied instruction address either to said even address decoding means or to said odd address decoding means and to direct said applied instruction address, offset by one, to the remaining address decoding means, whereby the contents of the read pointer register determine not only which registers in the respective subarrays present instructions or parts thereof, but also the starting point of such instructions when presented at said n - bit output.

The advantages of the invention will be better understood from the following detailed description of the invention, in which:

Fig. 1 is a block diagram showing the overall organization of the instruction prefetch buffer according to the invention;

Fig. 1A illustrates examples of instruction formats having different lengths; and

Fig. 2 is a block and logic diagram of the address generation and control logic used in the instruction prefetch buffer shown in Fig. 1.

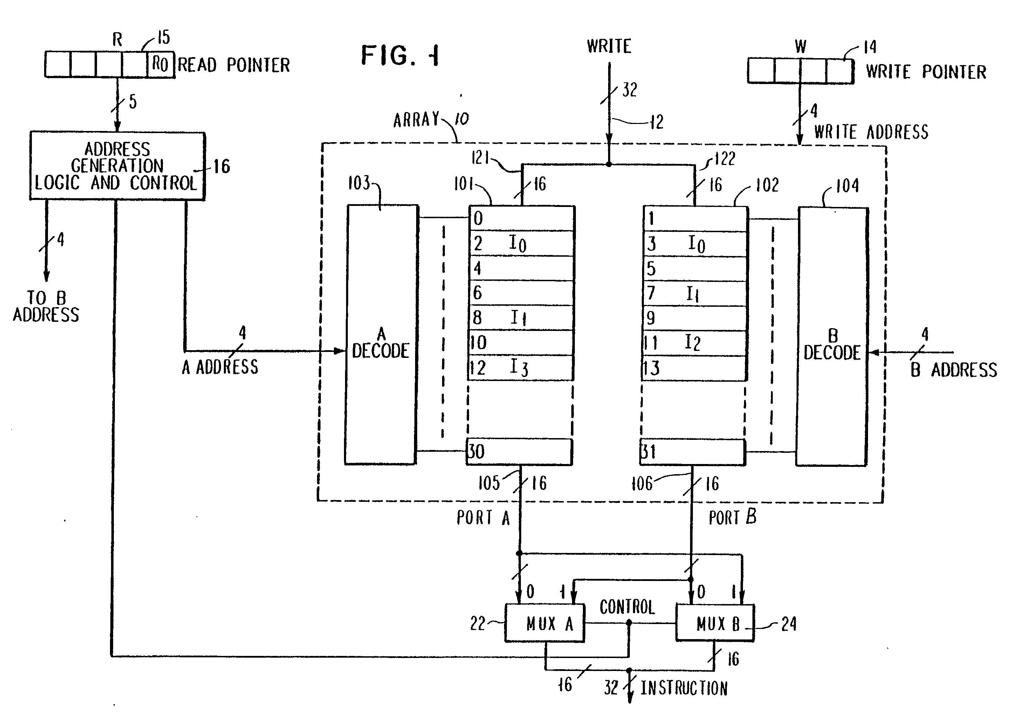

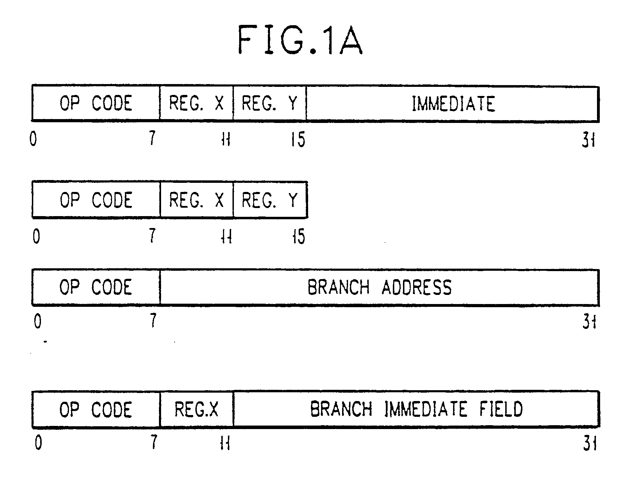

In the specific implementation of the invention as shown in Fig. 1 of the drawings, the instruction prefetch buffer is implemented as a 32-bit one-port-write and 16-bit two-port-read array 10. More specifically, the array 10 comprises an even array 101, referred to herein as the A array, and an odd array 102, referred to herein as the B array. Associated with the A array 101 is an address decoding network 103. A corresponding address decoding network 104 is associated with the B array 102. The A array 101 is addressed with even address values, while the B array 102 is addressed with odd address values. Each array 101 and 102 is shown as capable of storing 16 half words (16 bits) for a total of 32 half words, but those skilled in the art will understand that this is but one specific example. The principles of the invention are equally applicable to larger or smaller arrays and could be extended to byte fields (8 bits) and double word fields (64 bits).

As indicated in Fig. 1, instruction $I_0$ is a 32-bit instruction beginning at an even address in the A array 101 and continuing over to an odd address in the B array 102. Instruction $I_1$ is another 32-bit instruction, but this instruction begins at an odd address in the B array 102 and continues to an even address in the A array 101. Instruction $I_2$ is an example of a 16-bit instruction which begins at an odd address and is totally contained in the B array 102, while instruction $I_3$ is another 16-bit instruction which begins at an even address and is totally contained in the A array 101. Fig. 1A shows examples of instruction formats which may be used. In each of these formats, the first eight bits or byte contains the operation code. The next four bits of the top two formats specifies a register denoted here as the X register, while the following four bits specifies a register denoted here as the Y register. That is the total content of the second format shown in Fig. 1A, this format being an example of a 16-bit or half word instruction. The first format, however, is a 32-bit or word instruction and contains a 16-bit operand address, here denoted as "immediate". Two other examples of 32-bit or word instructions are also shown in Fig. 1A. In one of these there is 24-bit branch address, while in the other a 20-bit branch immediate field address follows a 4-bit register number. What should be understood is that one word (32-bits) is fetched at a time from the main memory and written into the prefetch buffer. Since different length instructions are used, an instruction can be anywhere within 2-byte boundaries, and the problem is to extract the instructions one at a time, however, they might be distributed within the boundaries of the prefetch buffer.

A 32-bit write bus 12 from main memory is split into two 16-bit buses 121 and 122 in the array 10 with bus 121 supplying the A array 101 with the first two bytes of the word fetched from the memory to be written in that array and bus 122 supplying the B array 102 with the second two bytes of the same word to be written in that array. Register 14 temporarily stores the write pointer W which points to the 32-bit location where a new word is to be written. The 32-bit location is obtained by combining both 16-bit registers A and B from the array 10 and addressing them as one 32-bit register. Thus, write address $W_0$ addresses the A array address $A_0$ and the B array address $B_1$ and so forth. Therefore, the W pointer is only four bits long.

Register 15 temporarily stores the read pointer R which points to the 32-bit location from where the instruction is to be read. The 5-bit R pointer is supplied to the address generation and control logic 16. This logic generates the 4-bit addresses for each of the arrays 101. Specifically, the 4-bit A address is supplied to the A decoder 103 and the 4-bit B address is supplied to the B decoder 104. The output of the A array 101 is supplied via a first 16-bit output bus 105 to port A, and the output of the B array 102 is supplied via a second 16-bit output bus 106 to port B.

In order to have the instruction read out of the array 10 aligned, the beginning of the instruction has always to be read from the multiplexer 22 whether the instruction is a 16-bit instruction or a 32-bit instruction. Also, to access a 32-bit instruction from the array, both sides of the array, odd and even, have to be addressed and data brought to ports A and B. But as already described, a 16-bit portion containing the beginning of the instruction may be either in the A array 101 or the B array 102; i.e., 32-bit instructions can start in either array. Therefore, multiplexers 22 and 24 are provided to read the instructions out of the array 10 in the proper order. The two 16-bit inputs of each multiplexer 22 and 24 are each connected to the 16-bit ports A and B of the array 10 but in the opposite order from each other. The 16-bit outputs of the multiplexers 22 and 24 are combined to provide a 32-bit instruction output. In the case of a 16-bit instruction, the high order 16 bits comprise a null field and are simply disregarded.

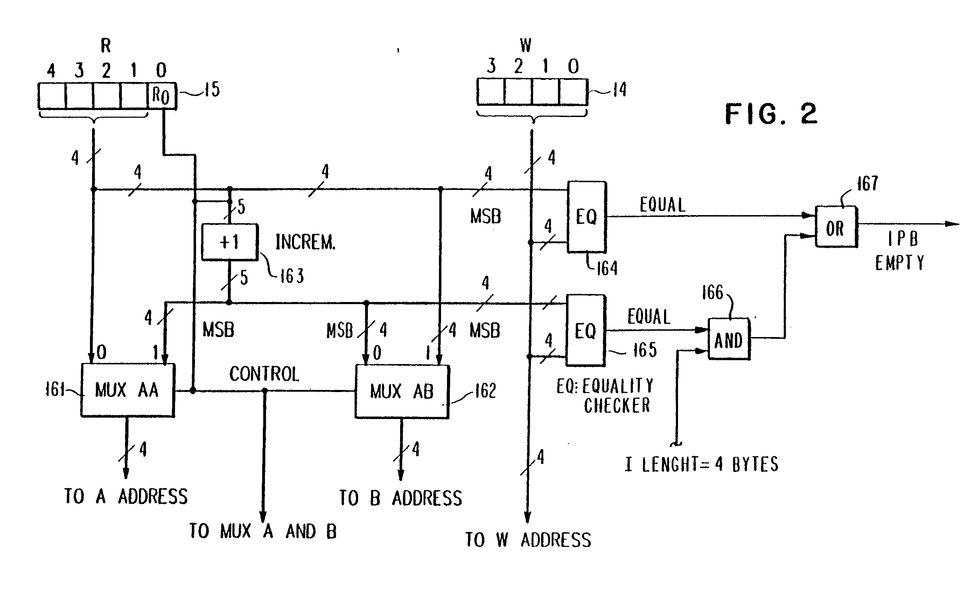

The address generation and control logic 16 is shown in more detail in Fig. 2. The four most significant bits (MSB) of the R pointer register 15 are first of all supplied to opposite inputs of multiplexers 161 and 162. In the case of a full word instruction, it will be understood that the address of the second half of the instruction is equal to the address of the first half plus one. Therefore, all five bits of the R pointer register 15 are supplied to an incrementer 163 which adds one to the R pointer. The four MSB from the incrementer are then supplied to the remaining inputs of the multiplexers 161 and 162. The least significant bit (LSB) $R_0$ of the R pointer is used to control multiplexers 161 and 162. The outputs of these multiplexers are the A and B addresses, respectively. $R_0$ therefore properly controls the selection of the two halves of a full word instruction irrespective of which array A or B the two halves are stored. Only the four MSBs are fed to the address multiplexers 161 and 162 since they address 16 registers in the A or B arrays 101 and 102 as determined by $R_0$. $R_0$ is also used to control the multiplexers 22 and 24. Thus, if $R_0 = 0$, the instruction starts in the A array and is aligned on the outputs of the array 10. On the other hand, if $R_0 = 1$, the instruction starts in array B and the two 16-bit outputs from array 10 have to be reversed in order for the instruction to be aligned.

Additional logic is associated with the W pointer register 14 and is used to indicate when the instruction prefetch buffer is empty. Specifically, equality checkers 164 165 each receive the four bits from register 14. Equality checker 164 in addition receives the four MSBs from register 15, while equality checker 165 receives the four MSBs from incrementer 163. The equality checkers may be implemented with exclusive OR gates and a NOR gate. The output of equality checker 165 is supplied to one input of AND gate 166 the second input of which is enabled whenever the instruction length is four bytes long; i.e., a 32-bit instruction as opposed to a 16-bit instruction for the specific example being described. The output of AND gate 166 and the output of equality checker 165 are connected to the inputs of OR gate 167 which provides an output indicating that the instruction prefetch buffer is empty. In other words, the instruction prefetch buffer is empty whenever $W = R$ or $W = R + 1$ and the instruction is a full word.

It is important to note that the disclosed implementation does not require an array having special features. Instead, the array 10 can be implemented using two general purpose arrays containing 16 registers each of a microprocessor by organizing them as an array having one 32-bit write port and two 16-bit read ports. Moreover, as already stated, the specific sizes of the arrays and the registers within the arrays may be varied depending on the application. For example, it is altogether possible to provide an array of byte registers with four or even eight subarrays of such byte registers. The addressing of such an arrangement, while complex, is a straight forward application of the principles of the invention as described by way of specific example. Output multiplexers in such a case could be part of the subarray decoders all organized into the one array decoder.

## Claims

1. An instruction prefetch buffer comprising a storage array having an n - bit input write port (12) and two m - bit read ports (A,B), where n = 2m, said array including first and second subarrays (101, 102) of m - bit registers associated respectively with said read ports, said subarrays being addressable under the control of even address decoding means (103) for decoding addresses for the first subarray and odd address decoding means (104) for decoding addresses for the second subarray, and multiplexer means (22, 24) connected to develop an n - bit output of which the m most significant bits are from the first or second subarray according to the setting of a multiplexer control signal, the buffer being characterised by address control logic (16) operable under the control of a read pointer register (15) to set said multiplexer control signal and having address multiplexers (161, 162) settable according to the value of a read pointer to direct an applied instruction address either to said even address decoding means or to said odd address decoding means and to direct said applied instruction address, offset by one, to the remaining address decoding means, whereby the contents of the read pointer register determine not only which registers in the respective subarrays present instructions or parts thereof, but also the starting point of such instructions when presented at said n - bit output.

2. A buffer as claimed in claim 1, further characterised in that said address control logic includes an incrementer connected to receive the contents of said read pointer register and to apply such contents, incremented by one, to said address multiplexers.

3. A microprocessor incorporating an instruction prefetch buffer as claimed in claim 1 or claim 2.

## Revendications

1. Tampon de préextraction d'instructions, comprenant un système de mémoire possédant une porte d'écriture (12) à n bits à l'entrée et deux portes de lecture (A, B) à m bits, où n = 2m, le système comportant un premier et un second sous-système (101, 102) de registres à m bits, coordonnés respectivement aux portes de lecture, les sous-systèmes étant adressables sous la commande d'un moyen de décodage d'adresses (103) pair destiné à décoder des adresses pour le premier sous-système et d'un moyen de décodage d'adresses (104) impair destiné à décoder des adresses pour le second sous-système, ainsi qu'un moyen multiplexeur (22, 24) connecté pour produire une information de sortie à n bits dont les m bits les plus significatifs proviennent du premier ou du second sous-système, suivant le positionnement d'un signal de commande de multiplexeur, caractérisé par une commande de contrôle d'adresses (16) fonctionnant sous la commande d'un registre (15) de pointeur de lecture pour positionner le signal de commande de multiplexeur, avec prévision de multiplexeurs d'adresses (161, 162) susceptibles d'être positionnés en fonction de la valeur d'un pointeur de lecture pour transmettre une adresse d'instruction appliquée, soit au moyen de décodage d'adresses pair, soit au moyen de décodage d'adresses impair, ainsi que pour transmettre cette adresse d'instruction appliquée, mais décalée d'une unité, au moyen de décodage d'adresses restant, de manière que le contenu du registre du pointeur de lecture détermine non seulement quels registres dans les sous-systèmes respectifs présentent des instructions ou des parties d'instructions, mais aussi le point de départ de ces instructions lorsqu'elles sont présentées dans ladite information de sortie à n bits.

2.  Tampon selon la revendication 1, caractérisé en outre en ce que la logique de contrôle d'adresses comporte un dispositif d'incrémentation connecté pour recevoir le contenu du registre de pointeur de lecture et pour appliquer ce contenu, augmenté d'une unité, au multiplexeur d'adresses.

3.  Microprocesseur comportant un tampon de préextraction d'instructions tel que revendiqué dans la revendication 1 ou 2.

**Patentansprüche**

1.  Puffer zum vorangehenden Auslesen eines Befehls, der aufweist: eine Speicheranordnung mit einem n-Bit Eingangsschreibanschluß (12) und zwei m-Bit Leseanschlüssen (A, B), mit n = 2m, wobei die Anordung erste und zweite Unteranordnungen (101, 102) von m-Bit Registern aufweist, die in dieser Reihenfolge den Leseanschlüssen zugeordnet sind und die Unteranordnungen unter der Steuerung von Decodiermitteln (103) für eine gerade Adresse zum Decodieren von Adressen für die erste Unteranordnung und von Decodiermitteln (104) für eine ungerade Adresse zum Decodieren von Adressen für die zweite Unteranordnung adressierbar sind und Multiplexen-Mittel (22,24), die angeschlossen sind um einem n-Bit Ausgang zu ergeben, dessen m höchstwertiges Bits aus der ersten oder zweiten Unteranordnung entsprechend dem Setzen eines Mulitplexersteuersignals sind, wobei der Puffer durch eine Adreßsteuerlogik (16) gekennzeichnet ist, die unter der Steuerung eines Lesezeigerregisters (15) betrieben werden kann, um das Multiplexersteuersignal zu setzen und Adreßmultiplexer (161,162) aufweist, die entsprechend dem Wert eines Lesezeigers gesetzt werden können, um eine angelegte Befehlsadresse entweder zu den Decodiermitteln für eine gerade Adresse oder zu den Decodiermitteln für eine ungerade Adresse zu richten und um die angelegte Befehlsadresse, die um eins versetzt ist, zu den übrigen Adreßdecodiermitteln zu richten, wodurch die Inhalte des Lesezeigeregisters nicht nur bestimmen, welche Register in den entsprechenden Unteranordnungen Befehle oder Teile davon liefern, sondern auch den Ausgangspunkt solcher Befehle, wenn sie an dem n-Bit Ausgang geliefert werden.

2.  Puffer nach Anspruch 1, der ferner dadurch gekennzeichnet ist, daß die Adreßsteuerlogik einen Aufwärtszähler aufweist, der angeschlossen ist, um die Inhalte des Lesezeigerregisters zu empfangen und um solche Inhalte, um eins erhöht, an die Adreßmultiplexer zu legen.

3.  Mikroprozessor, der einen Puffer zum vorangehenden Auslesen eines Befehls wie in Anspruch 1 oder Anspruch 2 beansprucht, enthält.

FIG. 1

R 15
READ POINTER

WRITE 32 12

W 14
WRITE POINTER

5

4 WRITE ADDRESS

ADDRESS GENERATION LOGIC AND CONTROL 16

ARRAY 10

4 TO B ADDRESS

4 A ADDRESS

103 A DECODE

101 121 16 122 16 102 104 B DECODE

| 0 |  |
| 2 | $I_0$ |
| 4 |  |
| 6 |  |
| 8 | $I_1$ |
| 10 |  |
| 12 | $I_3$ |

| 1 |  |
| 3 | $I_0$ |
| 5 |  |
| 7 | $I_1$ |
| 9 |  |
| 11 | $I_2$ |
| 13 |  |

30

31

4 B ADDRESS

105 16

106 16

PORT A

PORT B

22 MUX A

0 1 CONTROL 0 1

MUX B 24

16

16 16

32 INSTRUCTION

EP 0 195 202 B1

# FIG.1A

| OP CODE | REG. X | REG. Y | IMMEDIATE |
|---------|--------|--------|-----------|

0　　　　　　　7　　　11　　　15　　　　　　　　　　　　　　　　31

| OP CODE | REG. X | REG. Y |
|---------|--------|--------|

0　　　　　　　7　　　11　　　15

| OP CODE | BRANCH ADDRESS |
|---------|----------------|

0　　　　　　　7　　　　　　　　　　　　　　　　　　　　　　　　31

| OP CODE | REG.X | BRANCH IMMEDIATE FIELD |
|---------|-------|------------------------|

0　　　　　　　7　　　11　　　　　　　　　　　　　　　　　　31

FIG. 2

EP 0 195 202 B1